(19) Europäisches Patentamt
European Patent Office
Office européen des brevets

(11) **EP 4 787 389 A1**

(12) **EUROPEAN PATENT APPLICATION**
published in accordance with Art. 153(4) EPC

(43) Date of publication:
**05.08.2026 Bulletin 2026/32**

(21) Application number: **24869971.2**

(22) Date of filing: **09.07.2024**

(51) International Patent Classification (IPC):
**G21C 17/10** (2006.01)

(52) Cooperative Patent Classification (CPC):
Y02E 30/30

(86) International application number:
**PCT/CN2024/104470**

(87) International publication number:
**WO 2025/066415 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 CN 202311251149**

(71) Applicants:
• **Ling Ao Nuclear Power Co., Ltd**
  **Shenzhen, Guangdong 518000 (CN)**
• **China Nuclear Power Technology Research
  Institute Co., Ltd.**
  **Shenzhen, Guangdong 518031 (CN)**

(72) Inventors:
• **YANG, Rongrui**
  **Shenzhen, Guangdong 518000 (CN)**
• **WANG, Xin**
  **Shenzhen, Guangdong 518000 (CN)**

• **HE, Mingtao**
  **Shenzhen, Guangdong 518000 (CN)**
• **ZHAO, Changyou**
  **Shenzhen, Guangdong 518000 (CN)**
• **WANG, Xinxin**
  **Shenzhen, Guangdong 518000 (CN)**
• **WEI, Jinfeng**
  **Shenzhen, Guangdong 518000 (CN)**
• **XU, Xingxing**
  **Shenzhen, Guangdong 518000 (CN)**
• **GAO, Qingyu**
  **Shenzhen, Guangdong 518000 (CN)**
• **LI, Zhijun**
  **Shenzhen, Guangdong 518000 (CN)**
• **XU, Zhixian**
  **Shenzhen, Guangdong 518000 (CN)**
• **LI, Wen**
  **Shenzhen, Guangdong 518000 (CN)**

(74) Representative: **V.O.**
**P.O. Box 87930**
**2508 DH Den Haag (NL)**

(54) **OUT-OF-CORE DETECTOR CALIBRATION METHOD AND APPARATUS, AND DEVICE, STORAGE MEDIUM AND PROGRAM PRODUCT**

(57) An out-of-core detector calibration method, comprising: acquiring initial detection power data obtained by means of an out-of-core detector performing out-of-core detection on a target nuclear reactor, and acquiring detection power calibration parameters corresponding to the initial detection power data (S101); and using the detection power calibration parameters to perform calibration processing on the initial detection power data, so as to obtain corrected target detection power data (S102). wherein the detection power calibration parameters are calculated by means of working conditions of different water temperatures among a plurality of power working conditions in a constructed nuclear reactor, and the working conditions of different water temperatures are used for simulating the influence of different in-core water temperature distributions on the detection power data detected by means of the out-of-core detector.

EP 4 787 389 A1

the initial power detection data obtained by the ex-core detector performing ex-core detection on a target nuclear reactor is obtained, and the power detection calibration parameters corresponding to the initial power detection data are obtained

S101

calibration is performed on the initial power detection data based on the power detection calibration parameters to obtain calibrated target power detection data

S102

FIG. 1

**Description**

This application claims priority to Chinese patent application No. 202311251149.2, titled "METHOD AND APPARATUS FOR CALIBRATING EX-CORE DETECTOR, DEVICE, STORAGE MEDIUM, AND PROGRAM PRODUCT", filed on September 26, 2023, the content of which is hereby incorporated by reference in its entirety.

**TECHNICAL FIELD**

The present application relates to the technical field of ex-core detection, and in particular, to a method and apparatus for calibrating an ex-core detector, a device, a storage medium, and a program product.

**BACKGROUND**

Ex-core detection technology plays an important role in operation control, core protection, and data monitoring of nuclear reactors. During the operation of a conventional nuclear reactor, the interior of the reactor core is in an environment of high temperature, high pressure, and high radioactivity. Therefore, it is necessary to use an ex-core detector arranged outside the nuclear reactor to detect power detection data such as the actual overall operating power of the reactor core and axial power offset.

Under different operating conditions, the number of neutrons in the reactor core detected by the ex-core detector will change, which affects the power detection data of the ex-core detector. Therefore, the power detection data of the ex-core detector needs to be calibrated regularly to ensure the accuracy and reliability of the power detection data of the ex-core detector. In related arts, the calibration is usually performed on the influence caused by the deviation between the nuclear power and thermal power of the nuclear reactor on the power detection data of the detector during the power change period in the nuclear reactor.

However, the above calibration for the ex-core detector fails to take all factors affecting the power data measured by the ex-core detector into consideration, and the problem of low accuracy in calibrating the power detection data of the detector still exists.

**SUMMARY**

According to various embodiments of the present application, a method and apparatus for calibrating an ex-core detector, a device, a storage medium, and a program product are provided.

A method for calibrating an ex-core detector is provided. The method includes:

obtaining initial power detection data obtained by an ex-core detector performing ex-core detection on a target nuclear reactor, and obtaining power detection calibration parameters corresponding to the initial power detection data; and performing calibration on the initial power detection data based on the power detection calibration parameters to obtain calibrated target power detection data;

where the power detection calibration parameters are calculated based on constructed operating conditions with different water temperatures among a plurality of power operating conditions in the nuclear reactor, and the operating conditions with different water temperatures are configured to simulate influences of different in-core water temperature distributions on power detection data detected by the ex-core detector.

A water-temperature-based apparatus for calibrating an ex-core detector is provided. The apparatus includes:

an obtaining module, configured to obtain initial power detection data obtained by an ex-core detector performing ex-core detection on a target nuclear reactor, and to obtain power detection calibration parameters corresponding to the initial power detection data;

a processing module, configured to perform calibration on the initial power detection data based on the power detection calibration parameters to obtain calibrated target power detection data;

where the power detection calibration parameters are calculated based on constructed operating conditions with different water temperatures among a plurality of power operating conditions of the nuclear reactor, and the different water temperature conditions are configured to simulate influences of different in-core water temperature distributions on power detection data detected by the ex-core detector.

A computer device is provided. The computer device includes a memory and a processor. The memory stores a computer program. The processor, when executing the computer program, implements the following steps:

obtaining initial power detection data obtained by an ex-core detector performing ex-core detection on a target nuclear reactor, and obtaining power detection calibration parameters corresponding to the initial power detection data; and performing calibration on the initial power detection data based on the power detection calibration parameters to obtain calibrated target power detection data;

where the power detection calibration parameters are calculated based on constructed operating conditions with different water temperatures among a plurality of power operating conditions in the nuclear reactor, and the operating conditions with different water temperatures are configured to simulate influences of different in-core water temperature distributions on power detection data detected by the ex-core detector.

A computer-readable storage medium is provided. A computer program is stored on the computer-readable storage medium. The computer program, when executed by a processor, implements the following steps:

obtaining initial power detection data obtained by an ex-core detector performing ex-core detection on a target nuclear reactor, and obtaining power detection calibration parameters corresponding to the initial power detection data; and performing calibration on the initial power detection data based on the power detection calibration parameters to obtain calibrated target power detection data;
where the power detection calibration parameters are calculated based on constructed operating conditions with different water temperatures among a plurality of power operating conditions in the nuclear reactor, and the operating conditions with different water temperatures are configured to simulate influences of different in-core water temperature distributions on power detection data detected by the ex-core detector.

A computer program product is provided. The computer program product includes a computer program. The computer program, when executed by a processor, implements the following steps:

obtaining initial power detection data obtained by an ex-core detector performing ex-core detection on a target nuclear reactor, and obtaining power detection calibration parameters corresponding to the initial power detection data; and performing calibration on the initial power detection data based on the power detection calibration parameters to obtain calibrated target power detection data;
where the power detection calibration parameters are calculated based on constructed operating conditions with different water temperatures among a plurality of power operating conditions in the nuclear reactor, and the operating conditions with different water temperatures are configured to simulate influences of different in-core water temperature distributions on power detection data detected by the ex-core detector.

Details of one or more embodiments of the present application are set forth in the accompanying drawings and the description below. Other features, objectives, and advantages of the present application will be apparent from the description, the accompanying drawings, and the claims.

## BRIEF DESCRIPTION OF DRAWINGS

To describe the technical solutions in the embodiments of the present application or the prior art more clearly, the accompanying drawings required for describing the embodiments or the prior art are briefly introduced below. Apparently, the accompanying drawings in the following description are merely some embodiments of the present application. For those of ordinary skill in the art, other accompanying drawings may also be obtained according to these accompanying drawings without inventive efforts.

FIG. 1 is a schematic flowchart of a method for calibrating an ex-core detector in an embodiment.
FIG. 2 is a schematic flowchart of a computer device obtaining power detection calibration parameters corresponding to initial power detection data in another embodiment.
FIG. 3 is a cross-sectional view of a nuclear reactor in an embodiment.
FIG. 4 is a schematic flowchart of Step 202 in another embodiment.
FIG. 5 is a schematic flowchart of a method for calibrating an ex-core detector in another embodiment.
FIG. 6 is a schematic flowchart of Step 102 in another embodiment.
FIG. 7 is a structural block diagram of an apparatus for calibrating an ex-core detector in an embodiment.
FIG. 8 is an internal structural diagram of a computer device in an embodiment.

## DETAILED DESCRIPTION

To make the objectives, technical solutions, and advantages of the present application clearer, the present application is further described in detail below with reference to the accompanying drawings and embodiments. It should be understood that the specific embodiments described herein are merely used to explain the present application, and are not intended to limit the present application.

Ex-core detection technology plays an important role in the operation monitoring of nuclear reactors. During the operation of a conventional nuclear reactor, the interior of the reactor core is in an environment of high temperature, high pressure, and high radioactivity. Therefore, it is necessary to use an ex-core detector arranged outside the nuclear reactor to detect power detection data, such as the actual overall operating power of the reactor core and axial power offset. A nuclear power plant monitors, protects, and controls the nuclear reactor based on the power detection data (also referred to as indication values) of the ex-core detector.

During the operation of the nuclear power plant at actual power, different electrical grid loads result in different operating conditions with different powers. Changes in the operating conditions will cause changes in the number of neutrons in the reactor core detected by the ex-core detector, thereby affecting the power detection data of the ex-core detector. Therefore, the power detection data of the ex-core detector needs to be calibrated regularly to ensure the accuracy and authenticity of the power detection data of the ex-core detector.

Factors actually causing the deviation in the power detection data of the ex-core detector are also related to the absorption of neutrons and shielding in the nuclear reactor. Once the material and thickness of the reactor core reflector are fixed, the shielding coefficient remains substantially unchanged. Therefore, the absorption of neutrons by the moderator in the nuclear reactor is a critical influencing factor. Generally, most commercial nuclear reactors are pressurized water reactors, and the moderator is water. Changes in water temperature lead to changes in water density, which in turn significantly affect the absorption of neutrons in the reactor core. Correspondingly, the number of neutrons detected by the ex-core detector also changes, causing deviation in the power detection data of the ex-core detector. It can be seen that the influence of changes in water temperature in the nuclear reactor on the power detection data of the ex-core detector cannot be ignored.

In related arts, when calibrating the power detection data detected by the ex-core detector, only the influence caused by the deviation between the in-core nuclear power, ex-core nuclear power, and thermal power of the nuclear reactor on the power detection data of the detector during the power change period in the nuclear reactor is usually taken into account. Therefore, the calibration for the ex-core detector in conventional technologies still has the problem of low accuracy of the calibrated power detection data of the detector.

In view of this, a method for calibrating an ex-core detector is provided in an embodiment of the present application. Initial power detection data obtained by an ex-core detector performing ex-core detection on a target nuclear reactor is obtained, and power detection calibration parameters corresponding to the initial power detection data are obtained. Calibration is performed on the initial power detection data based on the power detection calibration parameters to obtain target power detection data. The power detection calibration parameters are calculated through constructed operating conditions with different water temperatures in the nuclear reactor. The operating conditions with different water temperatures are configured to simulate the influences of different in-core water temperature distributions on power detection data detected by the ex-core detector. As such, operating conditions with different water temperatures in the nuclear reactor are constructed. When calibrating the power detection data of the ex-core detector, the influence of different in-core water temperature distributions on the power detection data detected by the ex-core detector is considered in the calculation of the power detection calibration parameters, so that the calculated power detection calibration parameters are more accurate. Therefore, calibrating the power detection data of the ex-core detector based on the power detection calibration parameters can improve the accuracy of the power detection data of the ex-core detector.

The method for calibrating the ex-core detector provided in the embodiment of the present application can be applied to a computer device. The computer device may be a server. The server may be a single server or a server cluster composed of a plurality of servers.

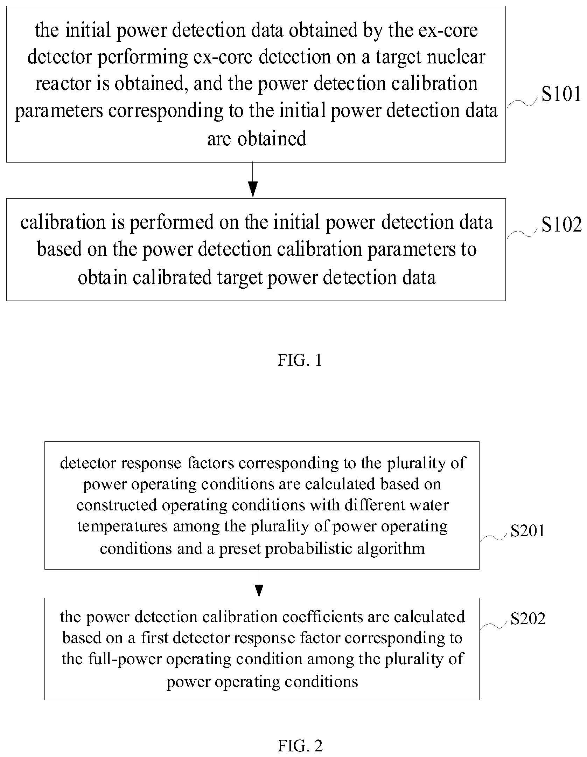

In an embodiment, as shown in FIG. 1, a method for calibrating an ex-core detector is provided. The method is described by taking the application of the method to a computer device as an example. The method includes the following steps:

at Step 101, the initial power detection data obtained by the ex-core detector performing ex-core detection on a target nuclear reactor is obtained, and the power detection calibration parameters corresponding to the initial power detection data are obtained.

In an embodiment of the present application, the ex-core detector is a detector or instrument arranged outside the nuclear reactor and configured to monitor and measure the activity of the nuclear reactor. The ex-core detector is configured to detect a neutron signal from the nuclear reactor, that is, the ex-core detector is capable of detecting important operating parameters such as the actual overall operating power of the reactor core in the nuclear reactor and axial power offset (AO), so as to obtain initial power detection data. The computer device obtains the initial power detection data.

Optionally, the computer device may monitor the reading of the ex-core detector to read the initial power detection data.

In addition, the computer device can obtain the power detection calibration parameters corresponding to the initial power detection data. The power detection calibration parameters are parameters configured to calibrate the initial power detection data of the ex-core detector.

For example, when the target nuclear reactor is currently operating under a full-power operating condition, the power detection calibration parameters are power detection calibration coefficients corresponding to the full-power operating condition. When the target nuclear reactor is currently operating under a non-full-power operating condition, the power detection calibration parameters may include power detection calibration coefficients corresponding to the full-power operating condition and a power indication deviation value. The power indication deviation value may represent the degree of deviation of the power detection data of the ex-core detector under the non-full-power operating condition compared with that under the full-power operating condition.

When the target nuclear reactor is currently operating under the non-full-power operating condition, directly using the power detection calibration coefficients corresponding to the full-power operating condition to perform calibration on the initial power detection data will lead to inaccurate calibration. Therefore, the power indication deviation value further needs to be obtained, and further calibration is performed based on the power indication deviation value.

At Step 102, calibration is performed on the initial power detection data based on the power detection calibration parameters to obtain calibrated target power detection data.

For example, the computer device can multiply the power detection calibration parameters by the initial power detection data, and perform a mathematical operation on the initial power detection data by multiplication to obtain the target power detection data, so as to implement calibration of the initial power detection data.

The power detection calibration parameters are calculated through constructed operating conditions with different water temperatures among a plurality of power operating conditions in the nuclear reactor. The operating conditions with different water temperatures are configured to simulate the influences of different in-core water temperature distributions on power detection data detected by the ex-core detector.

In the embodiment of the present application, the operating conditions with different water temperatures are obtained by adjusting water temperatures at different positions in the nuclear reactor based on a reference baseline operating condition. The different positions include a position of a downcomer region within the nuclear reactor and a position of a baffle-barrel gap between a baffle and a core barrel in the nuclear reactor.

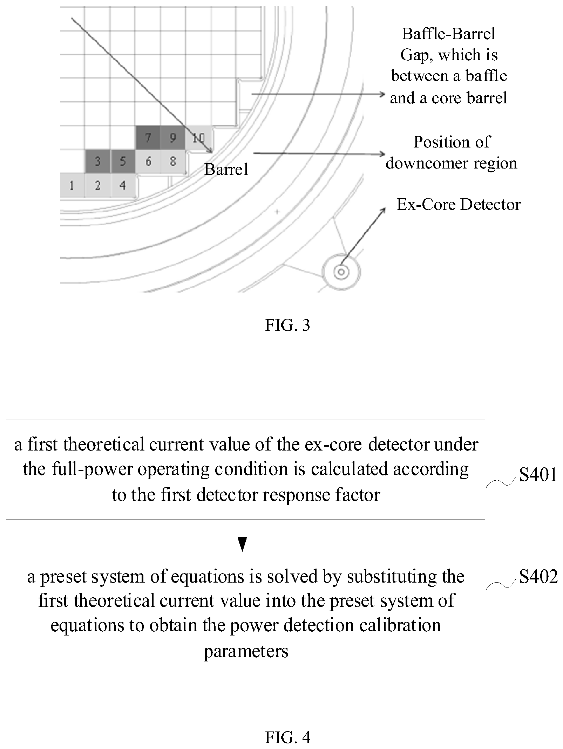

For example, a nuclear reactor core is generally cylindrical. As shown in FIG. 3, which is a quarter cross-sectional view of the nuclear reactor, the core of the nuclear reactor includes a plurality of core assemblies (indicated by small squares in FIG. 3). A component surrounding the assemblies is referred to as a baffle, that is, straight lines surrounding the small squares in FIG. 3. A component surrounding the baffle is referred to as a core barrel. The core barrel is cylindrical as a whole, and all assemblies can be fixed within one core barrel.

For a conventional pressurized water reactor, the core of the nuclear reactor is submerged in moderator water during operation, in other words, a gap between the baffle and the core barrel is configured to accommodate water. A gap exists between the outer surface of the core barrel and the inner surface of an outermost pressure vessel of the nuclear reactor (as shown in FIG. 3, the pressure vessel of the nuclear reactor surrounds the core barrel). The gap is also configured to accommodate water. The water in the nuclear reactor flows in from the upper part of the outer cylinder of the nuclear reactor, and then flows out upward from the bottom of the core. The part from which the water flows in from the upper part of the periphery of the baffle is the downcomer region.

Accordingly, in an embodiment of the present application, when constructing operating conditions with different water temperatures, it is considered to adjust the water temperature in the above downcomer region, or adjust the water temperature in the gap between the baffle and the core barrel.

For example, as shown in Table 1 below, three operating conditions with different water temperatures in the nuclear reactor are constructed respectively. A first operating condition is a reference operating condition of hot full power (HFP). A second operating condition is an operating condition in which the water temperature of the downcomer region is modified according to a radial water temperature distribution under hot full power. A third operating condition is an operating condition in which the axial water temperature distribution between the baffle and the core barrel is modified according to the radial water temperature distribution under hot full power.

Table 1: Description of Operating Conditions with Different Water Temperatures

| Operating Conditions | Purposes |
|---|---|
| 1. Water temperature at all positions is 295°C, and boron concentration is 1111 ppm | Reference baseline operating condition |
| 2. Same as the reference baseline operating condition, except that the water temperature of the downcomer is changed to 292.6°C | Independently investigating the influence of the water temperature of the downcomer on the calibrated power detection data of the ex-core detector |

(continued)

| Operating Conditions | Purposes |
|---|---|
| 3. Same as the reference baseline operating condition, except that the portion between the baffle and the core barrel corresponding to an active segment is evenly segmented into 4 segments, with water temperatures, from bottom to top, being 295.1 °C, 300.1 °C, 305.1°C, and 310.1°C, respectively | Independently investigating the influence of the water temperature between the baffle and the core barrel on the calibrated power detection data of the ex-core detector |

The operating conditions with different water temperatures are constructed in the above manner. The power detection calibration parameters can be calculated based on the constructed operating conditions with different water temperatures in the nuclear reactor. Through a large number of experiments during research, the inventors of the present application found that the influence of water temperatures on the initial power detection data can be quantitatively calculated based on the above operating conditions with different water temperatures. For example, under the operating conditions shown in Table 1, it is obtained through calculation and analysis that the influence of Operating condition 2 on the initial power detection data is about 2%, and the influence of Operating condition 3 on the initial power detection data is about 4%. Therefore, the ex-core detector can be calibrated more accurately according to specific water temperature changes and initial power detection data, so as to monitor, protect, and control the nuclear reactor more accurately.

Based on the embodiment shown in FIG. 1, referring to FIG. 2, this embodiment relates to a process in which a computer device obtains power detection calibration parameters corresponding to the initial power detection data. In this embodiment, the power detection calibration parameters include power detection calibration coefficients corresponding to a full-power operating condition. The process in which the computer device obtains the power detection calibration parameters corresponding to the initial power detection data can include Step 201 and Step 202 shown in FIG. 2.

At Step 201, detector response factors corresponding to the plurality of power operating conditions are calculated based on constructed operating conditions with different water temperatures among the plurality of power operating conditions and a preset probabilistic algorithm.

The plurality of power operating conditions include a full-power operating condition and a low-power operating condition. The full-power operating condition refers to the condition under which the nuclear reactor operates at the highest power during operation, and the nuclear reactor can reach the maximum power level under normal operating conditions under the full-power operating condition. The low-power operating condition refers to the condition under which the nuclear reactor operates at a relatively low power during operation. The low-power operating condition may be an operating condition under which the power of the nuclear reactor is 80% or 50%.

In an embodiment of the present application, the preset probabilistic algorithm may be the Monte Carlo algorithm, which calculates the detector response factors corresponding to the plurality of power operating conditions by simulating a process of neutron transport from the reactor core to the ex-core detector in the nuclear reactor. It can be understood that the detector response factors are obtained by simulating the neutron transport inside the nuclear reactor to calculate the responses of the ex-core detector to neutron signals under different power operating conditions. The detector response factors can be represented in the form of a function.

Referring to FIG. 3, based on the 1/8 symmetry of the core of the nuclear reactor, 10 core assemblies are selected, and response factors of the respective assemblies to the ex-core detector under the plurality of power operating conditions are calculated, respectively..

For example, in the calculation process using the above Monte Carlo algorithm, first, the input parameters under different power operating conditions of the nuclear reactor are determined. The input parameters may include water temperatures (the three different water temperatures constructed in the above), pressures, and material properties. Next, random numbers conforming to a specific probability distribution are generated by a constructed random number generator. Then, through cyclic iteration, a random parameter is generated by the random number generator in each iteration, and the random parameter is applied to a response function model of the ex-core detector, to calculate the response factors of the respective assemblies to the ex-core detector under the plurality of power operating conditions, respectively. The calculation formula is shown in Formula (1):

$$W_i(r) = \frac{R_i(r)}{\sum R_i(r)} \times 100\% \qquad\qquad \text{Formula (1)}$$

where $i$ refers to the axial segment index of the detector. The range of $i$ is 1 to 6, representing 6 different axial segments. $W_i$ ($r$) refers to the contribution of fission neutrons at the position $r$ in the core of the nuclear reactor to the response of the $i$-th segment of the ex-core detector.

As such, the computer device can calculate and obtain detector response factors corresponding to the full-power operating condition and the low-power operating condition, respectively.

By means of the above, the computer device selects a part of the peripheral assemblies of the nuclear reactor to calculate response factors according to the symmetry of the core in the nuclear reactor. In such a way, the calculation of the entire nuclear reactor can be reflected through the calculation of some of the assemblies according to the symmetry of the core, which can effectively reduce the calculation and analysis complexity while providing calculated data that is relatively accurate.

At Step 202, the power detection calibration coefficients are calculated based on a first detector response factor corresponding to the full-power operating condition among the plurality of power operating conditions.

As described above, the detector response factors of the respective assemblies to the ex-core detector under the plurality of power operating conditions are obtained through the preset probabilistic algorithm. In the nuclear reactor, the full-power operating condition refers to the condition under which the nuclear reactor operates at the highest power during operation, and the nuclear reactor can reach the maximum power level under normal operating conditions under the full-power operating condition. Under the full-power operating condition, the response of the ex-core detector to the neutron signal from the core in the nuclear reaction is the first detector response factor.

The power detection calibration coefficients are parameters configured to calibrate the power detection data of the detector to calibrate the actual initial power detection data into more accurate power data.

Based on the embodiment shown in FIG. 2, referring to FIG. 4, Step 202 may include Step 401 and Step 402 shown in FIG. 4.

At Step 401, a first theoretical current value of the ex-core detector under the full-power operating condition is calculated according to the first detector response factor.

In an embodiment of the present application, the computer device can calculate the first theoretical current signal response Ri of the ex-core detector under the full-power operating condition. The calculation formula is shown in Formula (2) below:

$$R_i = \int_V P_i(r)W_i(r)\,dr \qquad\qquad \text{Formula (2)}$$

where, $W_i(r)$ is a first detector response function (the first detector response factor), representing the contribution of fission neutrons at a position $r$ in the core of the nuclear reactor to the response of the $i$-th segment of the ex-core detector. $V$ is the total volume of the core. $P_i(r)$ is the power at the position $r$ in the core of the nuclear reactor.

Since the current signal response $R$ of the ex-core detector is directly proportional to the current signal $I$ of the ex-core detector, the current signal response $R$ of the ex-core detector can be configured as a simulated value of the current signal $I$ of the ex-core detector, that is, an optimal estimated value of the measured current signal of the ex-core detector. As such, the corresponding first theoretical current value $I_i$ of the ex-core detector can be obtained based on the first detector response factor $R_i$ of the ex-core detector under the full-power operating condition.

Then, the first theoretical current values of the upper segments ($i$ ranging from 1 to 3) of the ex-core detector are consolidated into an upper first theoretical current value $I_U$. The first theoretical current values of lower segments ($i$ ranging from 4 to 6) of the ex-core detector are consolidated into a lower first theoretical current value $I_L$.

At Step 402, a preset system of equations is solved by substituting the first theoretical current value into the preset system of equations to obtain the power detection calibration parameters.

In an embodiment of the present application, an ex-core axial power offset $AO_{ex}$ is obtained based on the upper first theoretical current value $I_U$ and the lower first theoretical current value $I_L$ under the above full-power operating condition according to the calculation Formula (3) below:

$$AO_{ex} = \frac{I_U - I_L}{I_U + I_L} \qquad\qquad \text{Formula (3)}$$

For example, an in-core axial power offset $AO_{in}$ in the nuclear reactor can be obtained based on a full-core flux map. The full-core flux map is a chart configured to represent the number of neutrons (a type of subatomic particle) at different positions inside the nuclear reactor. Then, according to a linear relationship between the ex-core axial power offset $AO_{ex}$ and the in-core axial power offset $AO_{in}$, fitting coefficients $a$ and $b$ are obtained through a least-squares fitting relation, as shown in the following Formula (4):

$$AO_{ex} = a + b \cdot AO_{in} \qquad\qquad \text{Formula (4)}$$

According to the preset equation set, as shown in Formula (5) to Formula (7), the power detection calibration parameters of the ex-core detector are obtained through calculation, which include calibration coefficients $\alpha$, $K_U$, and $K_L$

under the full-power operating condition, where $\alpha$ is a detector calibration coefficient, $K_U$ and $K_L$ are an upper calibration coefficient and a lower calibration coefficient, respectively.

$$\alpha = \frac{1-a^2}{b} \qquad\qquad \text{Formula (5)}$$

$$K_U = \frac{1}{K(1+a)} \qquad\qquad \text{Formula (6)}$$

$$K_L = \frac{1}{K(1-a)} \qquad\qquad \text{Formula (7)}$$

As such, the computer device obtains the power detection calibration coefficients based on the first detector response factor.

According to the above method, the computer device can calculate the power detection calibration coefficients based on the first detector response factor corresponding to the full-power operating condition. In such a way, the power detection calibration coefficients can be used to assist in the design and optimization of the nuclear reactor, so as to obtain accurate power detection data from the ex-core detector.

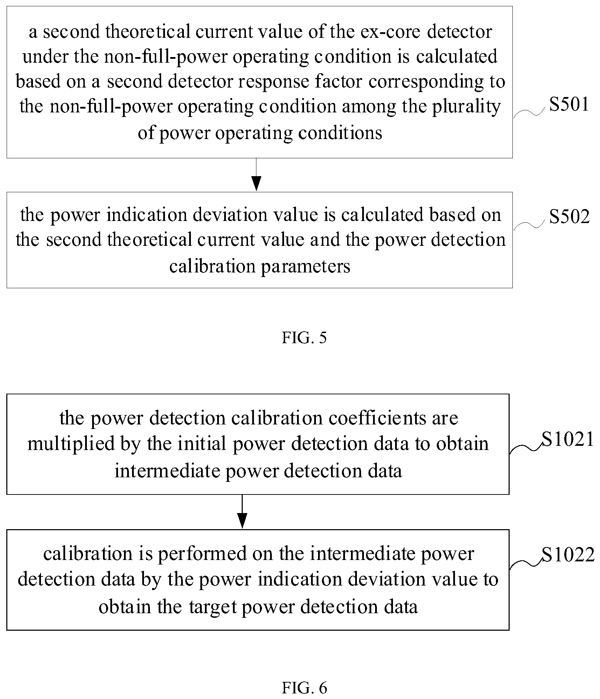

In an embodiment, based on the embodiment shown in FIG. 2, referring to FIG. 5, in this embodiment, when the current operating condition of the ex-core detector is the non-full-power operating condition, the power detection calibration parameters further include a power indication deviation value between the non-full-power operating condition and the full-power operating condition. This embodiment relates to a process in which the computer device obtains the power detection calibration parameters.

As shown in FIG. 5, the method for calibrating the ex-core detector in this embodiment further includes Step 501 and Step 502 shown in FIG. 5.

At Step 501, a second theoretical current value of the ex-core detector under the non-full-power operating condition is calculated based on a second detector response factor corresponding to the non-full-power operating condition among the plurality of power operating conditions.

In an embodiment of the present application, the non-full-power operating condition is a low-power operating condition of the nuclear reactor, which may be an operating condition in which the power of the nuclear reactor is 80% or an operating condition in which the power of the nuclear reactor is 50%. Under the non-full-power operating condition, the second detector response factor under each non-full-power operating condition is obtained through the above preset probabilistic algorithm (Monte Carlo algorithm). The second detector response factor (second detector response function) is denoted as $W_{i1}(r)$.

For example, based on the obtained second detector response factor $W_{i1}(r)$, a second theoretical current signal response $R_{i1}$ of the ex-core detector under the non-full-power operating condition is calculated according to Formula (8) below:

$$R_{i1} = \int_V P_{i1}(r)W_{i1}(r)\mathrm{d}r \qquad\qquad \text{Formula (8)}$$

where, as described above, the current signal response $R$ of the ex-core detector is directly proportional to the current signal $I$ of the ex-core detector, thus, the current signal response $R_{i1}$ of the ex-core detector can be configured as a simulated value of the current signal $I_{i1}$ of the ex-core detector. As such, the second theoretical current value $I_{i1}$ of the ex-core detector under the non-full-power operating condition is obtained.

At Step 502, the power indication deviation value is calculated based on the second theoretical current value and the power detection calibration parameters.

In an embodiment of the present application, a corresponding upper second theoretical current value $I_{U1}$ and a corresponding lower second theoretical current value $I_{L1}$ may be obtained according to the second theoretical current value $I_{i1}$. The corresponding power indication deviation value is calculated according to the following Formula (9) and Formula (10), where $P_r(r)$ is the core indication power, and $\Delta I(K)$ is the axial core indication power deviation.

$$P_r(r) = K_U(K)I_{U1} + K_L(K)I_{L1} \qquad\qquad \text{Formula (9)}$$

$$\Delta I(K) = \alpha(K)[K_U(K)I_{U1} - K_L(K)I_{L1}] \qquad\qquad \text{Formula (10)}$$

As such, the computer device can calculate the second theoretical current value of the ex-core detector under the non-full-power operating condition based on the second detector response factor, and then calculate the power indication deviation value based on the second theoretical current value and the power detection calibration parameters, which helps calibrate the ex-core detector and improve the accuracy and reliability thereof.

Based on the embodiment shown in FIG. 5, referring to FIG. 6, this embodiment relates to a process in which the computer device performs calibration on initial power detection data by the power detection calibration parameters to obtain calibrated target power detection data. As shown in FIG. 6, Step 102 includes Step 1021 and Step 1022 shown in FIG. 6.

At Step 1021, the power detection calibration coefficients are multiplied by the initial power detection data to obtain intermediate power detection data.

In an embodiment of the present application, the computer device can perform multiplication on the obtained power detection calibration coefficients and the initial power detection data under the non-full-power operating condition. Since the power detection calibration coefficients used are obtained based on the full-power operating condition, the intermediate power detection data obtained by multiplying the power detection calibration coefficients by the initial power detection data under the non-full-power operating condition exhibits a certain deviation. Therefore, further calibration needs to be performed on the intermediate power detection data.

At Step 1022, calibration is performed on the intermediate power detection data using the power indication deviation value to obtain the target power detection data.

The intermediate power detection data is power detection data obtained after processing with the power detection calibration coefficient. The target power detection data is the final power detection data obtained after further calibration is performed on the intermediate power detection data.

For example, a corresponding mathematical operation is performed on the power indication deviation value obtained under the non-full-power operating condition and the obtained intermediate power detection data, to obtain the calibrated target power detection data. It can be understood that the target power detection data is more accurate power detection data obtained by performing further calibration on the intermediate power detection data that is calculated based on the power detection calibration coefficients.

According to the above manner, the computer device can perform calculation using the power detection calibration coefficients obtained under the full-power operating condition with response factors of the full-power operating condition (100% power) and low-power operating conditions (80% power or 50% power), respectively, to obtain the intermediate power detection data under each operating condition. Then, the correction is performed on each piece of intermediate power detection data using the power indication deviation value to obtain the final calibrated target power detection data. By using the method for calibrating the ex-core detector to replace the conventional approach employed in nuclear power plants which uses an on-site flux map test method to calibrate the power detection data of the ex-core detector, the calibration of power detection data of the ex-core detector can be performed directly and in real time through theoretical calculation. In addition, with the method for calibrating the ex-core detector, the ex-core detector can accurately monitor the power change of the nuclear reactor in a transient state of the nuclear reactor (i.e., instantaneous change of the reactor power under an unsteady operating condition, that is, a rapid change of the nuclear reactor power) and rapid power rise and fall stages.

In an embodiment, a method for calibrating an ex-core detector is provided, which is applied to a computer device. The method includes the following steps.

At Step A1, initial power detection data obtained by an ex-core detector performing ex-core detection on a target nuclear reactor is obtained by the computer device, and power detection calibration parameters corresponding to the initial power detection data are obtained.

The power detection calibration parameters include power detection calibration coefficients corresponding to the full-power operating condition. Obtaining the power detection calibration parameters includes the following steps.

At Step a, detector response factors corresponding to a plurality of power operating conditions are calculated by the computer device through constructed operating conditions with different water temperatures among the plurality of power operating conditions and a preset probabilistic algorithm.

The operating conditions with different water temperatures are obtained by adjusting water temperatures at different positions in the nuclear reactor based on a reference baseline operating condition. The different positions include a position of a downcomer region within the nuclear reactor and a position of a baffle-barrel gap between a baffle and a core barrel in the nuclear reactor.

At Step b, a first theoretical current value of the ex-core detector under the full-power operating condition is calculated by the computer device based on the first detector response factor.

At Step c, a preset system of equations is solved by substituting the first theoretical current value into the preset system of equations by the computer device to obtain the power detection calibration parameters.

When the current operating condition of the ex-core detector is the non-full-power operating condition, the power detection calibration parameters further include a power indication deviation value between the non-full-power operating condition and the full-power operating condition. Obtaining the power detection calibration parameters further includes the following steps.

At Step a1, a second theoretical current value of the ex-core detector under the non-full-power operating condition is calculated by the computer device based on a second detector response factor corresponding to the non-full-power operating condition among the plurality of power operating conditions.

At Step b1, the power indication deviation value is calculated by the computer device based on the second theoretical current value and the power detection calibration parameters.

At Step A2, calibration is performed on the initial power detection data by the computer device using the power detection calibration parameters to obtain calibrated target power detection data.

The power detection calibration parameters are calculated through constructed operating conditions with different water temperatures in the nuclear reactor. The operating conditions with different water temperatures are configured to simulate the influences of different in-core water temperature distributions on power detection data detected by the ex-core detector.

Taking the non-full-power operating condition as an example, Step A2 includes the following steps.

At Step a2, the power detection calibration coefficients are multiplied by the initial power detection data by the computer device to obtain intermediate power detection data.

At Step b2, correction is performed on the intermediate power detection data by the computer device using the power indication deviation value to obtain target power detection data.

In the above manner, the embodiments of the present application construct operating conditions with different water temperatures in the nuclear reactor. When calibrating the power detection data of the ex-core detector, the influences of different in-core water temperature distributions on the power detection data detected by the ex-core detector are considered in the calculation of the power detection calibration parameters, so that the calculated power detection calibration parameters are more accurate. Therefore, calibrating the power detection data of the ex-core detector based on the power detection calibration parameters can improve the accuracy of the power detection data of the ex-core detector.

It should be understood that although the steps in the flowcharts involved in the above embodiments are displayed in sequence according to the arrows, these steps are not necessarily executed in the sequence indicated by the arrows. Unless explicitly stated herein, the execution of these steps is not strictly limited to the order, and these steps may be executed in other orders. In addition, at least a part of the steps in the flowcharts involved in the above embodiments may include multiple steps or multiple stages. These steps or stages are not necessarily executed and completed at the same time, but may be executed at different times. The execution order of these steps or stages is not necessarily sequential, but may be executed in turn or alternately with other steps, or at least a part of the steps or stages in other steps.

Based on the same inventive concept, an apparatus for calibrating an ex-core detector is further provided in an embodiment of the present application for implementing the above method for calibrating the ex-core detector. The implementation of the apparatus is similar to the implementation stated in the above method for calibrating the ex-core detector. Therefore, the definition of the apparatus for calibrating the ex-core detector provided in an embodiment below can refer to that of the above method for calibrating the ex-core detector, which is not repeated herein.

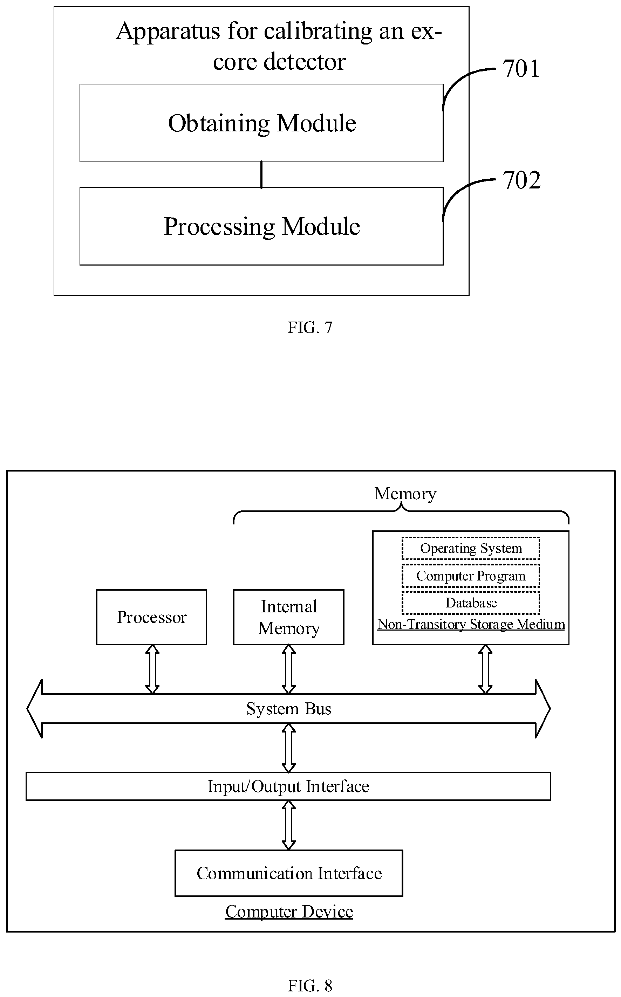

In an embodiment, as shown in FIG. 7, an apparatus for calibrating an ex-core detector is provided, including an obtaining module 701 and a processing module 702.

The obtaining module 701 is configured to obtain the initial power detection data obtained by the ex-core detector performing ex-core detection on the target nuclear reactor, and obtain the power detection calibration parameters corresponding to the initial power detection data.

The processing module 702 is configured to perform the calibration on the initial power detection data based on the power detection calibration parameters to obtain the calibrated target power detection data.

The power detection calibration parameters are calculated through the constructed operating conditions with the different water temperatures among the plurality of power operating conditions in the nuclear reactor. The operating conditions with the different water temperatures are configured to simulate the influences of the different in-core water temperature distributions on the power detection data detected by the ex-core detector.

In an embodiment, the obtaining module includes a first calculation unit and a second calculation unit.

The first calculation unit is configured to calculate the detector response factors corresponding to the plurality of power operating conditions based on the constructed operating conditions with the different water temperatures among the plurality of power operating conditions and the preset probabilistic algorithm.

The second calculation unit is configured to calculate the power detection calibration coefficients based on the first detector response factor corresponding to the full-power operating condition among the plurality of power operating conditions.

In an embodiment, the second calculation unit is specifically configured to calculate a first theoretical current value of the ex-core detector under the full-power operating condition based on the first detector response factor, and solve a preset system of equations by substituting the first theoretical current value into the preset system of equations to obtain the power detection calibration parameters.

In an embodiment, the apparatus further includes a first calculation module and a second calculation module.

The first calculation module is configured to calculate the second theoretical current value of the ex-core detector under the non-full-power operating condition based on the second detector response factor corresponding to the non-full-power operating condition among the plurality of power operating conditions.

The second calculation module is configured to calculate the power indication deviation value based on the second theoretical current value and the power detection calibration parameters.

In an embodiment, the processing module 702 includes a second calculation unit and a correction module.

The second calculation unit is configured to multiply the power detection calibration coefficients by the initial power detection data to obtain the intermediate power detection data.

The correction module is configured to perform the correction on the intermediate power detection data based on the power indication deviation value to obtain the target power detection data.

The operating conditions with the different water temperatures are obtained by adjusting water temperatures at the different positions in the nuclear reactor based on the reference baseline operating condition. The different positions include the position of the downcomer region within the nuclear reactor and the position of the baffle-barrel gap between the baffle and the core barrel in the nuclear reactor.

Each module in the above apparatus for calibrating the ex-core detector can be implemented wholly or partly in software, hardware, or a combination thereof. The above modules may be embedded in a processor of a computer device in hardware, independent of the processor, or stored in a memory of the computer device in software, so that the processor executes operations corresponding to the above modules.

In an embodiment, a computer device is provided. The computer device may be a server. An internal structural diagram of the computer device is shown in FIG. 8. The computer device includes a processor, a memory, an input/output (I/O) interface, and a communication interface. The processor, the memory, and the input/output interface are connected through a system bus. The communication interface is connected to the system bus through the input/output interface. The processor of the computer device is configured to provide calculation and control capabilities. The memory of the computer device includes a non-transitory storage medium and an internal memory. The non-transitory storage medium stores an operating system, a computer program, and a database. The internal memory provides an environment for the running of the operating system and the computer program in the non-transitory storage medium. The database of the computer device is configured to store the ex-core detector calibration data. The input/output interface of the computer device is configured to exchange information between the processor and an external device. The communication interface of the computer device is configured to communicate with an external terminal through a network connection. The computer program is executed by the processor to implement the method for calibrating the ex-core detector.

Those skilled in the art can understand that the structure shown in FIG. 8 is only a block diagram of a part of the structure related to the solution of the present application and does not constitute a limitation on the computer device to which the solution of the present application is applied. The specific computer device may include more or fewer components than those shown in the drawings, combine some components, or have different component arrangements.

In an embodiment, a computer device is provided, including a memory and a processor. A computer program is stored in the memory. The processor, when executing the computer program, implements the following steps:

obtaining the initial power detection data obtained by the ex-core detector performing the ex-core detection on the target nuclear reactor, and obtaining the power detection calibration parameters corresponding to the initial power detection data; and

performing the calibration on the initial power detection data based on the power detection calibration parameters to obtain the calibrated target power detection data.

The power detection calibration parameters are calculated through the constructed operating conditions with the different water temperatures among the plurality of power operating conditions in the nuclear reactor. The operating conditions with the different water temperatures are configured to simulate the influences of the different in-core water temperature distributions on the power detection data detected by the ex-core detector.

In an embodiment, the processor, when executing the computer program, specifically implements the following steps:

calculating the detector response factors corresponding to the plurality of power operating conditions based on the constructed operating conditions with the different water temperatures among the plurality of power operating conditions and the preset probabilistic algorithm; and

calculating the power detection calibration coefficients based on the first detector response factor corresponding to the full-power operating condition among the plurality of power operating conditions.

In an embodiment, the processor, when executing the computer program, specifically implements the following steps:

calculating the first theoretical current value of the ex-core detector under the full-power operating condition based on the first detector response factor; and
solving the preset system of equations by substituting the first theoretical current value into the preset system of equations to obtain the power detection calibration parameters.

In an embodiment, the processor, when executing the computer program, further implements the following steps:

calculating the second theoretical current value of the ex-core detector under the non-full-power operating condition based on the second detector response factor corresponding to the non-full-power operating condition among the plurality of power operating conditions; and
calculating the power indication deviation value based on the second theoretical current value and the power detection calibration parameters.

In an embodiment, the processor, when executing the computer program, specifically implements the following steps:

multiplying the power detection calibration coefficients by the initial power detection data to obtain intermediate power detection data; and
performing the calibration on the intermediate power detection data based on the power indication deviation value to obtain the target power detection data.

In an embodiment, when executing the computer program, the processor further implements the following step: obtaining the operating conditions with different water temperatures by adjusting the water temperatures at the different positions within the nuclear reactor based on the reference baseline operating condition, where the different positions include the position of the downcomer region within the nuclear reactor and the position of the baffle-barrel gap between the baffle and the core barrel in the nuclear reactor.

In an embodiment, a computer-readable storage medium is provided. A computer program is stored on the computer-readable storage medium. The computer program, when executed by a processor, implements the following steps:

obtaining the initial power detection data obtained by the ex-core detector performing the ex-core detection on the target nuclear reactor, and obtaining the power detection calibration parameters corresponding to the initial power detection data; and
performing the calibration on the initial power detection data based on the power detection calibration parameters to obtain the calibrated target power detection data.

The power detection calibration parameters are calculated through the constructed operating conditions with the different water temperatures among the plurality of power operating conditions in the nuclear reactor, and the operating conditions with the different water temperatures are configured to simulate the influences of the different in-core water temperature distributions on the power detection data detected by the ex-core detector.

In an embodiment, the computer program, when executed by the processor, specifically implements the following steps:

calculating the detector response factors corresponding to the plurality of power operating conditions based on the constructed operating conditions with the different water temperatures among the plurality of power operating conditions and the preset probabilistic algorithm; and
calculating the power detection calibration coefficients based on the first detector response factor corresponding to the full-power operating condition among the plurality of power operating conditions.

In an embodiment, the computer program, when executed by the processor, specifically implements the following steps:

calculating the first theoretical current value of the ex-core detector under the full-power operating condition based on the first detector response factor; and
solving the preset system of equations by substituting the first theoretical current value into the preset system of equations to obtain the power detection calibration parameters.

In an embodiment, the computer program, when executed by the processor, further implements the following steps:

calculating the second theoretical current value of the ex-core detector under the non-full-power operating condition based on the second detector response factor corresponding to the non-full-power operating condition among the plurality of power operating conditions; and
calculating the power indication deviation value based on the second theoretical current value and the power detection calibration parameters.

In an embodiment, the computer program, when executed by the processor, specifically implements the following steps:

multiplying the power detection calibration coefficients by the initial power detection data to obtain intermediate power detection data; and
performing the calibration on the intermediate power detection data based on the power indication deviation value to obtain the target power detection data.

In an embodiment, the computer program, when executed by the processor, further implements the following step:
obtaining the operating conditions with different water temperatures by adjusting the water temperatures at the different positions in the nuclear reactor based on the reference baseline operating condition, where the different positions include the position of the downcomer region in the nuclear reactor and the position of the baffle-barrel gap between the baffle and the core barrel in the nuclear reactor.

In an embodiment, a computer program product is provided. The computer program product includes a computer program. The computer program, when executed by a processor, implements the following steps:

obtaining the initial power detection data obtained by the ex-core detector performing the ex-core detection on the target nuclear reactor, and obtaining the power detection calibration parameters corresponding to the initial power detection data; and
performing the calibration on the initial power detection data based on the power detection calibration parameters to obtain the calibrated target power detection data.

The power detection calibration parameters are calculated through the constructed operating conditions with the different water temperatures among the plurality of power operating conditions in the nuclear reactor, and the operating conditions with the different water temperatures are configured to simulate the influences of different in-core water temperature distributions on the power detection data detected by the ex-core detector.

In an embodiment, the computer program, when executed by the processor, specifically implements the following steps:

calculating the detector response factors corresponding to the plurality of power operating conditions based on the constructed operating conditions with the different water temperatures among the plurality of power operating conditions and the preset probabilistic algorithm; and
calculating the power detection calibration coefficients based on the first detector response factor corresponding to the full-power operating condition among the plurality of power operating conditions.

In an embodiment, the computer program, when executed by the processor, specifically implements the following steps:

calculating the first theoretical current value of the ex-core detector under the full-power operating condition based on the first detector response factor; and
solving the preset system of equations by substituting the first theoretical current value into the preset system of equations to obtain the power detection calibration parameters.

In an embodiment, the computer program, when executed by the processor, further implements the following steps:

calculating the second theoretical current value of the ex-core detector under the non-full-power operating condition based on the second detector response factor corresponding to the non-full-power operating condition among the plurality of power operating conditions; and

calculating the power indication deviation value based on the second theoretical current value and the power detection calibration parameters.

In an embodiment, the computer program, when executed by the processor, specifically implements the following steps:

multiplying the power detection calibration coefficients by the initial power detection data to obtain the intermediate power detection data; and

performing the calibration on the intermediate power detection data based on the power indication deviation value to obtain the target power detection data.

In an embodiment, the computer program, when executed by the processor, further implements the following step:

obtaining the operating conditions with the different water temperatures by adjusting the water temperatures at the different positions in the nuclear reactor based on the reference baseline operating condition, where the different positions include the position of the downcomer region in the nuclear reactor and the position of the baffle-barrel gap between the baffle and the core barrel in the nuclear reactor.

The technical features of the above embodiments can be combined arbitrarily. To make the description concise, not all possible combinations of the technical features in the above embodiments are described. However, as long as there is no contradiction between the combinations of these technical features, the combinations shall be considered as falling within the scope of this specification.

The above embodiments merely provide some implementations of the present application, and the descriptions thereof are relatively detailed, but shall not be construed as limiting the scope of the present application. It should be noted that for those of ordinary skill in the art, some variations and improvements can be made without departing from the inventive concept of the present application, which all fall within the scope of protection of the present application. Therefore, the scope of protection of the present application shall be subject to the appended claims.

**Claims**

1.  A method for calibrating an ex-core detector, **characterized by** comprising:

    obtaining initial power detection data obtained by the ex-core detector performing ex-core detection on a target nuclear reactor, and obtaining power detection calibration parameters corresponding to the initial power detection data; and

    performing calibration on the initial power detection data based on the power detection calibration parameters to obtain calibrated target power detection data;

    wherein the power detection calibration parameters are calculated based on constructed operating conditions with different water temperatures among a plurality of power operating conditions in the nuclear reactor, and the operating conditions with different water temperatures are configured to simulate influences of different in-core water temperature distributions on power detection data detected by the ex-core detector.

2.  The method according to claim 1, **characterized in that**, the power detection calibration parameters comprise power detection calibration coefficients corresponding to a full-power operating condition, wherein obtaining the power detection calibration parameters corresponding to the initial power detection data comprises:

    calculating detector response factors corresponding to the plurality of power operating conditions based on constructed operating conditions with different water temperatures among the plurality of power operating conditions and a preset probabilistic algorithm; and

    calculating the power detection calibration coefficients based on a first detector response factor corresponding to the full-power operating condition among the plurality of power operating conditions.

3.  The method according to claim 2, **characterized in that**, calculating the power detection calibration coefficients based on the first detector response factor corresponding to the full-power operating condition comprises:

calculating a first theoretical current value of the ex-core detector under the full-power operating condition based on the first detector response factor; and

solving a preset system of equations by substituting the first theoretical current value into the preset system of equations to obtain the power detection calibration parameters.

4. The method according to claim 2, **characterized in that**, when a current operating condition of the ex-core detector is a non-full-power operating condition, the power detection calibration parameters further comprise a power indication deviation value between the non-full-power operating condition and the full-power operating condition, and the method further comprises:

calculating a second theoretical current value of the ex-core detector under the non-full-power operating condition based on a second detector response factor corresponding to the non-full-power operating condition among the plurality of power operating conditions; and

calculating the power indication deviation value based on the second theoretical current value and the power detection calibration parameters.

5. The method according to claim 4, **characterized in that**, performing calibration on the initial power detection data based on the power detection calibration parameters to obtain calibrated target power detection data comprises:

multiplying the power detection calibration coefficients by the initial power detection data to obtain intermediate power detection data; and

performing the calibration on the intermediate power detection data based on the power indication deviation value to obtain the target power detection data.

6. The method according to claim 1, **characterized in that**, the operating conditions with different water temperatures are obtained by adjusting the water temperatures at different positions within the nuclear reactor based on a reference baseline operating condition, wherein the different positions comprise a position of a downcomer region within the nuclear reactor and a position of a baffle-barrel gap between a baffle and a core barrel in the nuclear reactor.

7. A water-temperature-based apparatus for calibrating an ex-core detector, **characterized by** comprising:

an obtaining module, configured to obtain initial power detection data obtained by an ex-core detector performing ex-core detection on a target nuclear reactor, and to obtain power detection calibration parameters corresponding to the initial power detection data; and

a processing module, configured to perform calibration on the initial power detection data based on the power detection calibration parameters to obtain calibrated target power detection data;

wherein the power detection calibration parameters are calculated based on constructed operating conditions with different water temperatures among a plurality of power operating conditions in the nuclear reactor, and the operating conditions with different water temperatures are configured to simulate influences of different in-core water temperature distributions on power detection data detected by the ex-core detector.

8. A computer device comprising a memory and a processor, the memory storing a computer program, **characterized in that**, the processor, when executing the computer program, implements the steps of the method according to any one of claims 1 to 6.

9. A computer-readable storage medium having a computer program stored thereon, **characterized in that**, the computer program, when executed by a processor, implements the steps of the method according to any one of claims 1 to 6.

10. A computer program product comprising a computer program, **characterized in that**, the computer program, when executed by a processor, implements the steps of the method according to any one of claims 1 to 6.

the initial power detection data obtained by the ex-core detector performing ex-core detection on a target nuclear reactor is obtained, and the power detection calibration parameters corresponding to the initial power detection data are obtained ⟜ S101

calibration is performed on the initial power detection data based on the power detection calibration parameters to obtain calibrated target power detection data ⟜ S102

FIG. 1

detector response factors corresponding to the plurality of power operating conditions are calculated based on constructed operating conditions with different water temperatures among the plurality of power operating conditions and a preset probabilistic algorithm ⟜ S201

the power detection calibration coefficients are calculated based on a first detector response factor corresponding to the full-power operating condition among the plurality of power operating conditions ⟜ S202

FIG. 2

Baffle-Barrel
Gap, which is
between a baffle
and a core barrel

Position of
downcomer region

Barrel

Ex-Core Detector

| 7 | 9 | 10 |
| 3 | 5 | 6 | 8 |
| 1 | 2 | 4 |

FIG. 3

a first theoretical current value of the ex-core detector under
the full-power operating condition is calculated according
to the first detector response factor                                    S401

a preset system of equations is solved by substituting the
first theoretical current value into the preset system of
equations to obtain the power detection calibration
parameters                                                               S402

FIG. 4

a second theoretical current value of the ex-core detector under the non-full-power operating condition is calculated based on a second detector response factor corresponding to the non-full-power operating condition among the plurality of power operating conditions ~ S501

the power indication deviation value is calculated based on the second theoretical current value and the power detection calibration parameters ~ S502

FIG. 5

the power detection calibration coefficients are multiplied by the initial power detection data to obtain intermediate power detection data ~ S1021

calibration is performed on the intermediate power detection data by the power indication deviation value to obtain the target power detection data ~ S1022

FIG. 6

Apparatus for calibrating an ex-core detector

Obtaining Module — 701

Processing Module — 702

FIG. 7

Memory

Operating System

Computer Program

Database

Non-Transitory Storage Medium

Processor

Internal Memory

System Bus

Input/Output Interface

Communication Interface

Computer Device

FIG. 8

## INTERNATIONAL SEARCH REPORT

| International application No. |
| --- |
| **PCT/CN2024/104470** |

**A. CLASSIFICATION OF SUBJECT MATTER**

G21C 17/10(2006.01)i

According to International Patent Classification (IPC) or to both national classification and IPC

**B. FIELDS SEARCHED**

Minimum documentation searched (classification system followed by classification symbols)

IPC: G21C17

Documentation searched other than minimum documentation to the extent that such documents are included in the fields searched

Electronic data base consulted during the international search (name of data base and, where practicable, search terms used)

CNTXT, ENTXTC, CNKI: 标定, 补偿, 调校, 堆外, 堆外探测, 工况, 监测, 监控, 检测, 刻度系数, 水温, 水温, 探测, 温度, 校刻, 校正, 校准, 修正, 响应函数, ex-core, detect+, calibrat+, compensat+, adjust+, monitor+, scale coefficient?, temperature, response function

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117292861 A (LING'AO NUCLEAR POWER CO., LTD. et al.) 26 December 2023 (2023-12-26)<br>entire document | 1-10 |
| Y | 白家赫 等 (BAI, Jiahe et al.). "压水堆堆外核仪表系统单点校刻法研究及应用 (Research and Application of Single-Point Calibration Method for Ex-core Nuclear Instrument System of PWRs)"<br>核动力工程 (Nuclear Power Engineering), Vol. 44, No. 4, 31 August 2023 (2023-08-31), pages 25-32 | 1-10 |
| Y | JP 2005241604 A (MITSUBISHI HEAVY INDUSTRIES LTD.) 08 September 2005 (2005-09-08)<br>description, paragraphs 39-51, and figures 1-5 | 1-10 |
| Y | CN 115050496 A (XI'AN JIAOTONG UNIVERSITY) 13 September 2022 (2022-09-13)<br>description, paragraphs 9-12, and figures 1-3 | 1-10 |
| Y | JP 2023042308 A (TOSHIBA CORP. et.al) 27 March 2023 (2023-03-27)<br>paragraphs 38-42, and figures 1-4 | 1-10 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **29 September 2024** | **23 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/104470** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113936823 A (NUCLEAR POWER INSTITUTE OF CHINA) 14 January 2022 (2022-01-14)<br>    entire document | 1-10 |
| A | CN 110749919 A (CHINA NUCLEAR POWER INSTITUTE CO., LTD. et al.) 04 February 2020 (2020-02-04)<br>    entire document | 1-10 |
| A | CN 105006262 A (CHINA NUCLEAR POWER TECHNOLOGY RESEARCH INSTITUTE CO., LTD. et al.) 28 October 2015 (2015-10-28)<br>    entire document | 1-10 |
| A | CN 108172312 A (GUANGDONG NUCLEAR POWER JOINT VENTURE et al.) 15 June 2018 (2018-06-15)<br>    entire document | 1-10 |
| A | KR 20010038820 A (KOREA ELECTRIC POWER CORP.) 15 May 2001 (2001-05-15)<br>    entire document | 1-10 |

Form PCT/ISA/210 (second sheet) (July 2022)

## INTERNATIONAL SEARCH REPORT
### Information on patent family members

International application No.

**PCT/CN2024/104470**

| Patent document cited in search report | | | Publication date (day/month/year) | Patent family member(s) | | | Publication date (day/month/year) |
|---|---|---|---|---|---|---|---|
| CN | 117292861 | A | 26 December 2023 | None | | | |
| JP | 2005241604 | A | 08 September 2005 | JP | 3825447 | B2 | 27 September 2006 |
| CN | 115050496 | A | 13 September 2022 | None | | | |
| JP | 2023042308 | A | 27 March 2023 | None | | | |
| CN | 113936823 | A | 14 January 2022 | None | | | |
| CN | 110749919 | A | 04 February 2020 | None | | | |
| CN | 105006262 | A | 28 October 2015 | None | | | |
| CN | 108172312 | A | 15 June 2018 | None | | | |
| KR | 20010038820 | A | 15 May 2001 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311251149